# EUROPÄISCHE PATENTSCHRIFT

(11) **EP 0 785 365 B1**
(45) Veröffentlichungstag und Bekanntmachung des Hinweises auf die Patenterteilung: **13.10.1999**
(21) Anmeldenummer: 96810737.5
(22) Anmeldetag: 05.11.1996
(51) Int. Cl.: F16B 13/14

(54) **Ankerhülse für Verbundanker und Verfahren zur Erstellung von korrosionsbeständigen Befestigungen**
Anchor dowell for glued anchorages and procedure for producing non-corrodible connections
Douille d'ancrage pour des ancrages collés et procédé pour l'obtention de connexions antirouilles

(30) Priorität: 19.01.1996 DE 19601810
(43) Veröffentlichungstag der Anmeldung: 23.07.1997
(73) Patentinhaber: HILTI Aktiengesellschaft, 9494 Schaan (LI)
(72) Erfinder: Popp, Franz, 86807 Buchloe (DE); Rudolph, Martin, 6710 Nüziders (AT)
(74) Vertreter: Wildi, Roland

(56) Entgegenhaltungen:
- WO-A-84/01601
- FR-A- 2 223 587
- GB-A- 500 109

## Beschreibung

Die Erfindung betrifft eine Ankerhülse für Verbundanker, insbesondere eine Ankerhülse für den Einsatz in Verbindung mit Schienenbefestigungen auf Betonschwellen, gemäss dem Oberbegriff des Patentanspruchs 1. Die Erfindung betrifft auch ein Verfahren zur Erstellung von korrosionsbeständigen Befestigungen, insbesondere in Betonschwellen und dergleichen Untergründen zur Unterstützung von Schienen für Schienenfahrzeuge, gemäss dem Oberbegriff des Patentanspruchs 9.

Ein solcher Verbundanker ist allgemein bekannt.

Für die Unterstützung von Schienen von Schienenverkehrssystemen, wie beispielsweise Eisenbahnsystemen, Untergrundbahnen u.s.f., werden vielfach auch Betonschwellen eingesetzt. Die Schienen werden mit Hilfe von Befestigungselementen, in der Regel Schienenschrauben, auf den Betonschwellen befestigt. Dazu werden die Schienenschrauben in Ankerhülsen fixiert, die meist mit Hilfe eines organischen und/oder anorganischen Mörtels in Aufnahmebohrungen in den Betonschwellen verankert sind. Derartige Verbundankerbefestigungen kommen vor allem auch bei der nachträglichen Sanierung von beispielsweise im Laufe der Zeit mehr oder weniger korrodierten Schienenbefestigungen zum Einsatz. Die Schienensysteme sind im Freien Regen und Schnee aber auch unter Tage, beispielsweise bei Untergrundbahnsystemen, Feuchtigkeitseinbrüchen ausgesetzt. Die Feuchtigkeit durch Regen, Schnee und Kondenswasser kann sich in einer Aufnahmebohrung sammeln und zu einer raschen Korrosion des eingedrehten Befestigungselementes führen. Das in die Aufnahmebohrungen eingedrungene Wasser gefriert bei Frost und kann insbesondere bei Betonschwellen diese sogar sprengen.

Aufgabe der vorliegenden Erfindung ist es daher, ein Verbundankersystem zu schaffen, welches diesen Nachteilen der Befestigungssysteme des Stands der Technik abhilft. Ein Verbundanker soll dahingehend verändert werden, dass eine Erstellung von Befestigungspunkten ermöglicht wird, die auch bei Betonschwellen weitgehend unempfindlich gegenüber dem Eindringen von Wasser sind. Es sollen ein Verbundanker und ein Verfahren zur Erstellung von korrosionsbeständigen Befestigungen geschaffen werden, welche für Erstbefestigungen wie auch für die Sanierung von korrodierten Befestigungen eingesetzt werden können.

Die Lösung dieser Aufgaben besteht in einer Ankerhülse für einen Verbundanker, welche die im kennzeichnenden Abschnitt des Patentanspruchs 1 aufgeführten Merkmale aufweist. Ein erfindungsgemässes Verfahren zur Lösung der gestellten Aufgaben weist die im kennzeichenden Abschnitt des Patentanspruchs 9 aufgelisteten Verfahrensschritte auf.

Insbesondere wird durch die Erfindung gemäss Patentanspruch 1 eine Ankerhülse für einen Verbundanker geschaffen, der eine Innengewindehülse aufweist, die mittels organischem und/oder anorganischem Mörtel in einer vorbereiteten Aufnahmebohrung in einer Betonschwelle oder dergleichen Untergrund verankerbar ist und an ihrem einen Endbereich Lastangriffsmittel aufweist. Am freien Ende ihres zweiten, vorderen Bereichs besitzt die Ankerhülse zwei konzentrisch und hintereinander angeordnete, das freie Ende flüssigkeitsdicht abschliessende Verschlusselemente, die nacheinander aufdrückbar sind. Auf diese Weise ausgebildet kann die Ankerhülse in einer speziell vorbereiteten Aufnahmebohrung verankert weren. Die spezielle Vorbereitung der Aufnahmebohrung besteht darin, dass sie eine Entwässerungsbohrung aufweist, die sich vom Bohrlochgrund zur Rückseite der Betonschwelle oder ähnlichem Untergrund erstreckt. Die Entwässerungsbohrung ermöglicht es, dass in die Aufnahmebohrung eingedrungenes Wasser wieder abfliessen kann.

Die Verankerung der Ankerhülse erfolgt mit Hilfe von fliessfähigen organischen und/oder anorganischen Mörteln. Diese würden im Normalfall durch die Entwässerungsbohrung aus der Aufnahmebohrung abfliessen. Dem wirkt die erfindungsgemässe Ausbildung der Ankerhülse entgegen. Indem sie zwei konzentrisch und hintereinander angeordnete Verschlusselemente aufweist, die das zum Bohrlochgrund weisende zweite Ende flüssigkeitsdicht abschliessen und nacheinander aufdrückbar sind, kann zunächst die Entwässerungsbohrung derart verschlossen werden, dass die Mörtelmasse nicht in die Entwässerungsbohrung abfliessen kann. Das zweite Verschusselement sorgt dafür, dass die Mörtelmasse auch nicht in das Innere der Ankerhülse eindringen kann und dadurch das Einbringen und Fixieren des Befestigungselementes verhindert. Die Verschlusselemente werden nacheinander wieder geöffnet, so dass die Entwässerungsbohrung im gesetzten Zustand des Verbundankers wieder freigegeben ist.

In einer vorteilhaften Ausführungsvariante der Erfindung umfassen die Verschlusselemente ein mit dem zweiten Ende verbundenes, ausdrückbares Verschlussteil und eine auf das zweite Ende aufsteckbare, im wesentlichen napfförmige Abdichtkappe, die einen ausdrückbaren Bodenbereich aufweist. Die aufsteckbare Abdichtkappe stellt ein äusseres Verschlusselement dar, welches für die Abdichtung der Entwässerungsbohrung gegen ein Abfliessen der Mörtelmasse dient. Das ausdrückbare Verschlussteil ist mit dem zweiten Ende der Ankerhülse verbunden und verschliesst die Ankerhülse gegen ein Eindringen der Mörtelmasse. Der Bodenbereich der Abdichtkappe ist mit dem zweiten Endbereich der Ankerhülse ausdrückbar und fällt durch die Entwässerungsbohrung. Nach dem Aushärten der Mörtelmasse wird das Verschlussteil im zweiten Endbereich der Ankerhülse ausgedrückt, um den freien Durchgang von der Ankerhülse in die Entwässerungsbohrung zu ermöglichen. In die Ankerhülse eintretendes Wasser kann auf diese Weise wieder abfliessen. Dadurch ist die Korrosionsgefahr für das in der Ankerhülse fixierte Befestigungselement deutlich reduziert.

Um das Ausdrücken des Bodenbereichs der Abdichtkappe in die Entwässerungsbohrung mit Hilfe der Ankerhülse zu erleichtem, weist diese am zweiten Ende einen kleineren Durchmesser auf als im ersten Endbereich. Auf diese Weise kann der vordere Bereich der Ankerhülse nach dem Durchdrücken des Bodenbereichs der Abdichtkappe in die Durchgangsbohrung eingeschoben werden, bis die Ankerhülse mit ihrem durchmessergrösseren Umfangsbereich am Übergang von der Aufnahmebohrung zur Entwässerungsbohrung anliegt. Die Abdichtkappe ist mit Vorteil durch Reibungsschluss am Umfang des zweiten Endes der Ankerhülse gehalten. Auf diese Weise kann sie nicht verloren gehen und kann einfach mit Hilfe der Ankerhülse in die Aufnahmebohrung eingebracht und zur Entwässerungsbohrung vorgeschoben werden.

Indem der grösste Durchmesser des mit der Ankerhülse verbundenen Verschlussteils kleiner ist als der Durchmesser des ausdrückbaren Bodenbereichs der Abdichtkappe ist gewähtleistet, dass das ausgedrückte Verschlussteil durch die Entwässerungsbohrung fällt und diese nicht wieder verschliesst.

In einer zweckmässigen Ausführungsvariante der erfindungsgemässen Ankerhülse weist das Verschlussteil einen sich im Inneren der Hülse vom zweiten Ende in den Bereich der Lastangriffmittel erstreckenden Fortsatz auf. Über den Fortsatz wird das Verschlussteil an seiner Sollbruchstelle von der Ankerhülse getrennt. Mit Vorteil erfolgt das Ausdrücken des Verschlussteils während des Einbringens des Befestigungselementes, beispielsweise während des Einschraubens einer Ankerstange oder eines Schraubbolzens.

Die Abdichtkappe weist einen grössten Durchmesser auf, der derart bemessen ist, dass sie ohne Ausdrücken ihres Bodenbereichs in die vorbereitete Aufnahmebohrung einführbar ist und dort durch Reibungsschluss gehalten ist. Dabei ist der Reibungsschluss zwischen der Wandung der Aufnahmebohrung und der Abdichtkappe grösser als der Reibungsschluss zwischen der Abdichtkappe und dem zweiten Ende der Ankerhülse. Auf diese Weise ist sehr einfach gewährleistet, dass die Abdichtkappe beim Herausziehen der Ankerhülse aus der Aufnahmebohrung von dem vorderen zweiten Ende abgestreift wird und über der Mündung der Entwässerungsbohrung in Position verbleibt.

Die geschilderte Ankerhülse ist insbesonders für Verbundanker für Verankerungen in Aufnahmebohrungen, die am Bohrlochgrund mit einer Entwässerungsbohrung versehenen sind, ausgelegt. Dabei kann es sich um Erstbefestigungen handeln; sie kann aber auch bei Sanierungen von bereits korrodierten Befestigungspunkten eingesetzt werden. Vorzugsweise ist bei einem derartigen Verbundanker die Ankerhülse eine mit einem Innengewinde versehene Kunststoffhülse und das Befstigungselement ein Schraubbolzen, beispielsweise eine Schwellenschraube.

Bei dem erfindungsgemässen Verfahren zur Erstellung von korrosionsbeständigen Befestigungen wird ein Verbundanker umfassend eine Ankerhülse und ein, vorzugsweise lösbar in der Ankerhülse fixierbares, Befestigungselement mittels organischem und/oder anorganischem Mörtel in einer vorbereiteten Aufnahmebohrung verankert. Gemäss dem kennzeichnenden Abschnitt des Patentanspruchs 9 umfasst das erfindungsgemässe Verfahren die folgenden Verfahrensschritte:
- nach Erstellung der Aufnahmebohrung wird diese am Bohrlochgrund mit einer Entwässerungsbohrung geringeren Durchmessers versehen;
- eine erfindungsgemässe Ankerhülse wird in die vorbereitete Aufnahmebohrung eingeschoben und das Abdichtteil bis zur Mündung der Entwässerungsbohrung am Bohrlochgrund vorgeschoben;
- die Ankerhülse wird wieder aus der Aufnahmebohrung herausgezogen, wobei die Abdichtkappe vom zweiten Ende der Ankerhülse abgestreift wird und am Bohrlochgrund die Entwässerungsbohrung flüssigkeitsdicht verschliesst;
- der organische und/oder anorganische Mörtel wird in die Aufnahmebohrung eingebracht;
- die Ankerhülse ohne Abdichtkappe wird vollständig in die Aufnahmebohrung eingeschoben und dabei der Bodenbereich der Abdichtkappe in die Entwässerungsbohrung durchgedrückt;
- der Mörtel wird ausgehärtet; und
- nach dem Anordnen und Justieren eines zu befestigenden Gegenstandes wird ein Befestigungselement in die Ankerhülse eingebracht und dort fixiert, wobei das Verschlussteil am zweiten Ende der Ankerhülse ausgedrückt wird und in die geöffnete Entwässerungsbohrung verdrängt wird und somit die Entwässerungsbohrung freigegeben wird.

Der erfindungsgemässe Verfahrensablauf ist einfach durchführbar und logisch in seinem Ablauf. Die erforderlichen Komponenten sind auf ein Minimum beschränkt. Für das Verschliessen der erstellten Entwässerungsbohrung muss nur die Ankerhülse mit der aufgesteckten Abdichtkappe in die Aufnahmebohrung eingeführt werden und bis zur Mündung der Entwässerungsbohrung vorgeschoben werden. Die gewünschte Endposition ist erreicht, wenn die Abdichtkappe am Übergang von der Aufnahmebohrung zur durchmesserkleineren Entwässerungsbohrung aufliegt. Während des Zurückziehens der Ankerhülse aus der Aufnahmebohrung wird die Abdichtkappe vom vorderen Ende der Ankerhülse abgestreift und verbleibt in der geünschten Position. Die in die Aufnahmebohrung eingebrachte Mörtelmasse kann durch die nunmehr verschlossene Entwässerungsbohrung nicht abfliessen. Während des Wiedereinbringens der Ankerhülse in die mit Mörtel gefüllte Aufnahmebohrung wird der Bodenbereich der Abdichtkappe ausgedrückt. Die Entwässerungsöffnung ist dabei aber noch nicht freigegeben und wird zunächst noch durch die Ankerhülse verschlossen, sodass die Mörtelmasse nicht abfliessen kann. Erst nach dem Aushärten des Mörtels wird das Befestigungselement in die Ankerhülse eingebracht und fixiert. Dabei wird das Verschlussteil am zweiten Ende der Ankerhülse ausgedrückt und die Entwässerungsbohrung wird wieder freigegeben. Der grosse Vorteil der erfindungsgemässen Verfahrensführung zusammen mit der erfindungsgemässen Ausbildung des Verbundankers besteht darin, dass das Verschliessen und das Wieder-Öffnen der Entwässerungsbohrung ohne zusätzliche Werkzeuge allein mit Hilfe der Bestandteile des erfindungsgemässen Verbundankers erfolgt.

Das erfindungsgemässe Verfahren eignet sich insbesonder für die Erstellung von korrosionsbeständigen Befestigungen in Betonschwellen für die tragende Unterstützung von Schienen für Schienenfahrzeuge. In die Aufnahmebohrungen bzw. die Ankerhülsen eintretendes Wasser kann durch die Entwässerungsbohrung wieder abfliessen. Dadurch ist die Korrosionsgefahr reduziert und es kann verhindert werden, dass in der Aufnahmebohrung gefrierendes Wasser die Betonschwelle sprengt.

Im folgenden wird die Erfindung anhand eines Ausführungsbeispiels unter Bezugnahme auf die schematischen Zeichnungen näher erläutert. Es zeigen:
- Fig. 1: eine erfindungsgemässe Ankerhülse;
- Fig. 2: die Ankerhülse aus Fig. 1 in einer Aufnahmebohrung mit Entwässerungsbohrung;
- Fig. 3: die Ankerhülse aus Fig. 2 mit abgestreifter Abdichtkappe;
- Fig. 4: die die Entwässerungsbohrung verschliessende Abdichtkappe im Zustand des Verfüllens der Aufnahmebohrung mit einer Mörtelmasse;
- Fig. 5: die Ankerhülse aus Fig. 1 bis 3 in der Aufnahmebohrung mit durchgedrücktem Bodenbereich der Abdichtkappe; und
- Fig. 6: die Ankerhülse aus Fig. 5 mit einem eingeschraubten Befestigungselement und ausgedrücktem Verschlussteil.

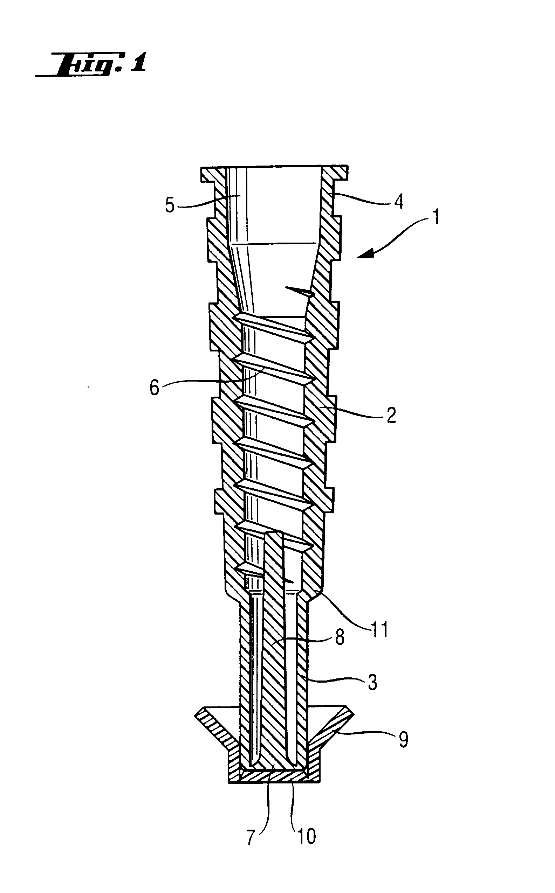

Die in Fig. 1 beispielsweise dargestellte Ankerhülse für einen Verbundanker ist gesamthaft mit dem Bezugszeichen 1 versehen. Sie umfasst eine mit einer durchgehenden Bohrung 5 versehene Innengewindehülse 2, welche einen vorderen Bereich 3 und einen hinteren Bereich 4 aufweist. Der vordere Bereich 3 weist einen kleineren Aussendurchmesser auf als der hintere Bereich 4. Im hinteren Bereich 4 der Innengewindehülse ist ein Lastangriffsmittel in Form eines Innen-Grobgewindes 6 vorgesehen. Der hintere Bereich 4 der Innengewindehülse kann zylindrisch ausgebildet sein; er kann sich aber auch, wie in der schematischen Darstellung angedeutet, unter Bildung einer Schulter 11 auf den vorderen Bereich 3 hin konisch verjüngen. Am Umfang des hinteren Bereiches 4 sind nicht näher bezeichnete Rippen vorgesehen, welche die Verbundbildung mit einer Mörtelmasse in der Aufnahmebohrung unterstützen. Der durchmesserkleinere vordere Hülsenbereich 3 kann zylindrisch ausgebildet sein; er kann auch konisch auf sein freies Vorderende hin zulaufend geformt sein.

Am freien Ende des vorderen Bereiches 3 der Innengewindehülse 2 sind zwei konzentrisch angeordnete Verschlusselemente vorgesehen. Diese werden von einem mit dem freien Ende des vorderen Bereiches 3 über eine Sollbruchstelle verbundenen Verschlussteil 7 und von einer etwa napfförmigen Abdichtkappe 9 gebildet, welche auf das freie Ende des vorderen Bereiches 3 aufsteckbar ist und dort vorzugsweise durch Reibungsschluss in Position gehalten ist. Die Abdichtkappe 9 ist mit einem ausdrückbaren Bodenbereich 10 ausgestattet. Das Verschlussteil 7 weist vorzugsweise, wie dargestellt, einen sich zum hinteren Hülsenbereich 4 fortsetzenden, in Richtung der Lastangriffsmittel 6 ragenden Fortsatz auf, dessen Funktion nachstehend noch näher erläutert wird. Die Innengewindehülse 2 und die Verschlusselemente 7 - 10 sind vorzugsweise aus Kunststoff gefertigt.

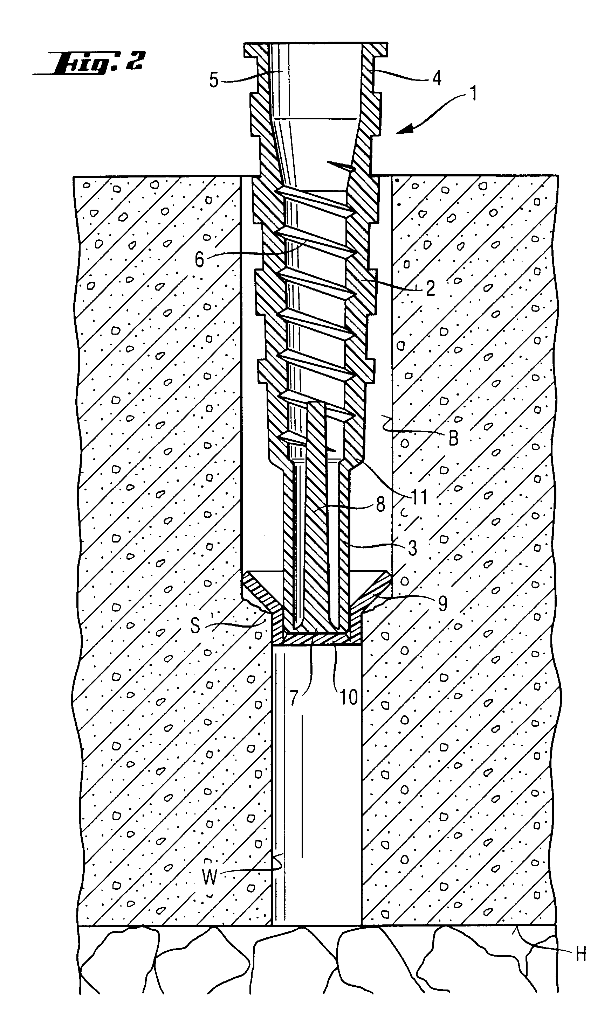

Fig. 2 zeigt die Ankerhülse 1 in eine Aufnahmebohrung B eines Untergrundes G eingesetzt. Bei dem Untergrund G handelt es sich beispielsweise um eine Betonschwelle für die tragende Unterstützung von Schienen für Schienenfahrzeuge. Um zu verhindem, dass ein in die Aufnahmebohrung B eingesetztes Befestigungselement durch Regenwasser, das sich in der Aufnahmebohrung sammelt, korrodiert und versagt, ist die Aufnahmebohrung B mit einer Entwässerungsbohrung W versehen, die sich vom Grund der Aufnahmebohrung B zur Rückseite H der Betonschwelle G erstreckt. Die Entwässerungsbohrung weist einen kleineren Querschnitt auf als die Aufnahmebohrung B. Im Übergangsbereich zwischen der weiteren Aufnahmebohrung B und der durchmesserkleineren Entwässerungsbohrung W befindet sich eine Schulter S als Tiefenanschlag für die in die Aufnahmebohrung B eingesetzte Ankerhülse 1. Die Ankerhülse 1 wird dazu so weit in die Aufnahmebohrung B eingeführt, bis die Abdichtkappe 9 an der Schulter S anliegt.

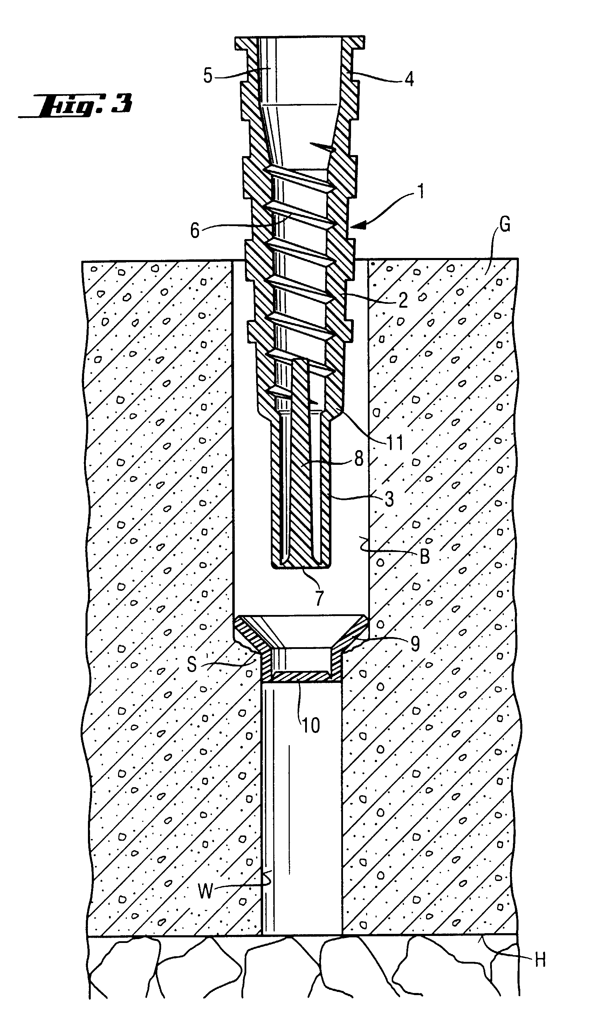

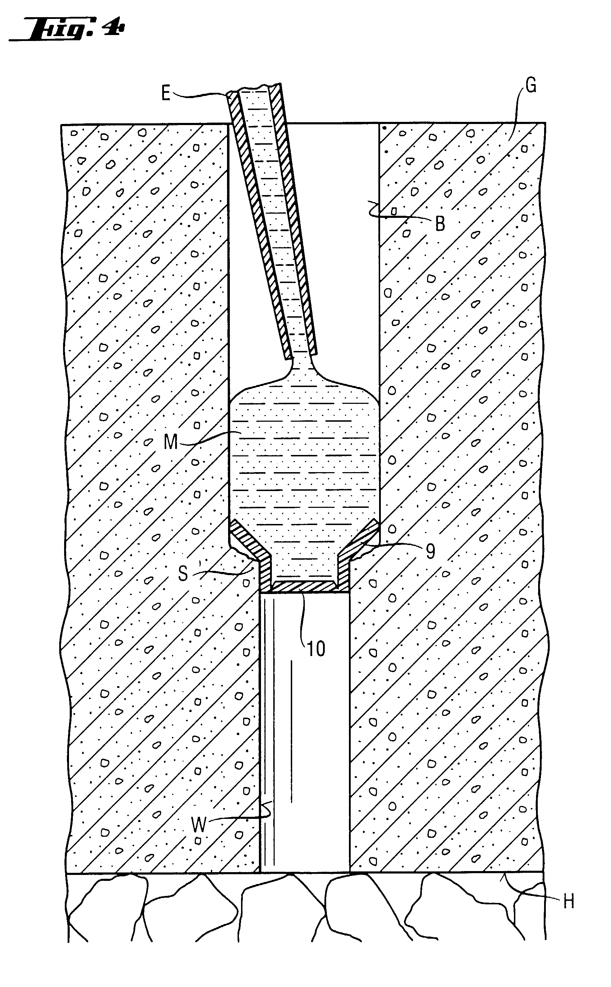

Ihren grössten Durchmesser weist die Abdichtkappe gemäss dem dargestellten Ausführungsbeispiel am rückwärtigen Rand der Abdichtkappe auf. Dieser ist derart bemessen, dass der Reibungsschluss zwischen der Wandung der Aufnahmebohrung und der Abdichtkappe grösser ist als der Reibungsschluss zwischen dem vorderen Bereich 3 der Innengewindehülse 2 und der Abdichtkappe 9. Auf diese Weise ist sichergestellt, dass die Abdichtkappe 9 vom freien Ende des vorderen Bereichs 3 der Innengewindehülse 2 abgestreift wird, während die mit dem Verschlussteil 7 verschlossene Innengewindehülse 2 wieder aus der Aufnahmebohrung B herausgezogen wird. Dieser Vorgang ist in Fig. 3 dargestellt. Aus der schematischen Darstellung ist ersichtlich, dass die Abdichtkappe 9 in ihrer Position verbleibt, in der sie die Entwässerungsbohrung W flüssigkeitsdicht verschliesst. Auf diese Weise ist die Aufnahmebohrung B mit verschlossener Entwässerungsbohrung W für die Aufnahme einer fliessfähigen organischen und/oder anorganischen Mörtelmasse M vorbereitet, welche über ein Verabreichungsgerät mit einer Applikationsspitze E in die Aufnahmebohrung B eingebracht wird, wie in Fig. 4 angedeutet ist. Die Abdichtkappe 9 verschliesst die Entwässerungsbohrung W und verhindert ein Abfliessen der in die Aufnahmebohrung B eingebrachten Mörtelmasse M.

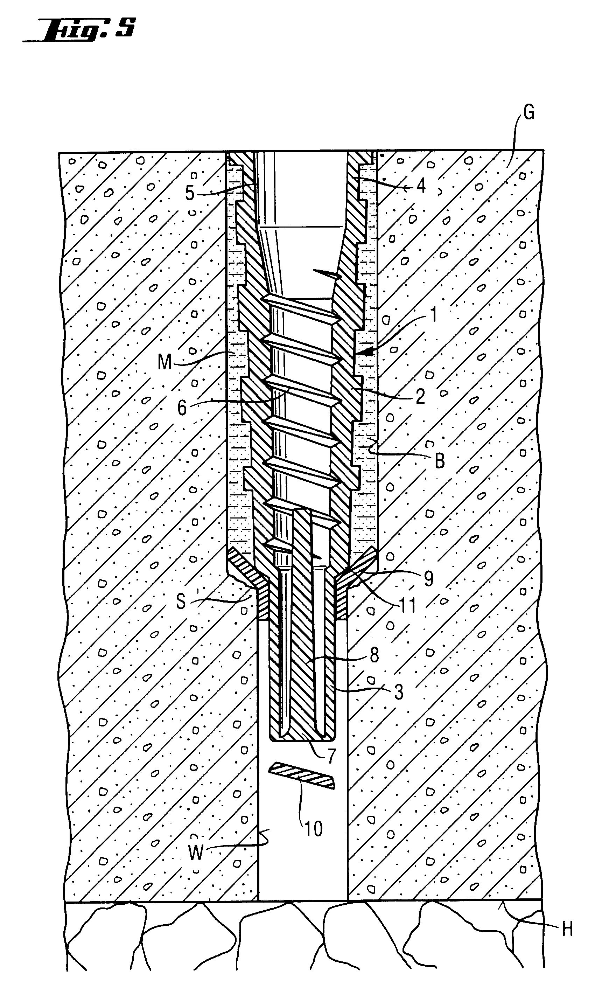

Nachdem die Aufnahmebohrung B mit einer ausreichenden Menge an Mörtelmasse M verfüllt worden ist, wird die Innengewindehülse 2 wieder in die Aufnahmebohrung B eingesetzt, was in Fig. 5 angedeutet ist. Das Verschlussteil 7 am freien Ende des vorderen Bereichs 3 der Innengewindehülse 2 verhindert dabei ein Eindringen der Mörtelmasse M in die Bohrung 5 der Innengewindehülse 2. Die Innengewindehülse wird diesmal so weit in die Aufnahmebohrung B vorgeschoben, bis das freie Ende des vorderen Bereichs 3 den Boden 10 der Abdeckkappe 9 durchdrückt. Der Aussendurchmesser des vorderen Bereichs 3 der Innengewindehülse 2 ist dabei derart auf den Durchmesser des ausdrückbaren Bodenteils 10 abgestimmt, dass die Entwässerungsbohrung W bei durchgedrücktem Bodenteil 10 der Abdichtkkappe 9 durch die Hülse selbst abgedichtet wird und keine Mörtelmasse M abfliessen kann. Dabei stützt sich die Schulter 11 im Übergangsbereich zwischen dem hinteren und dem vorderen Bereich 4 bzw. 3 der Innengewindehülse 2 über die nunmehr bodenlose Abdichtkappe 9 an der Schulter S im Übergangsbereich zwischen der Aufnahmebohrung B und der durchmesserkleineren Entwässerungsbohrung W ab.

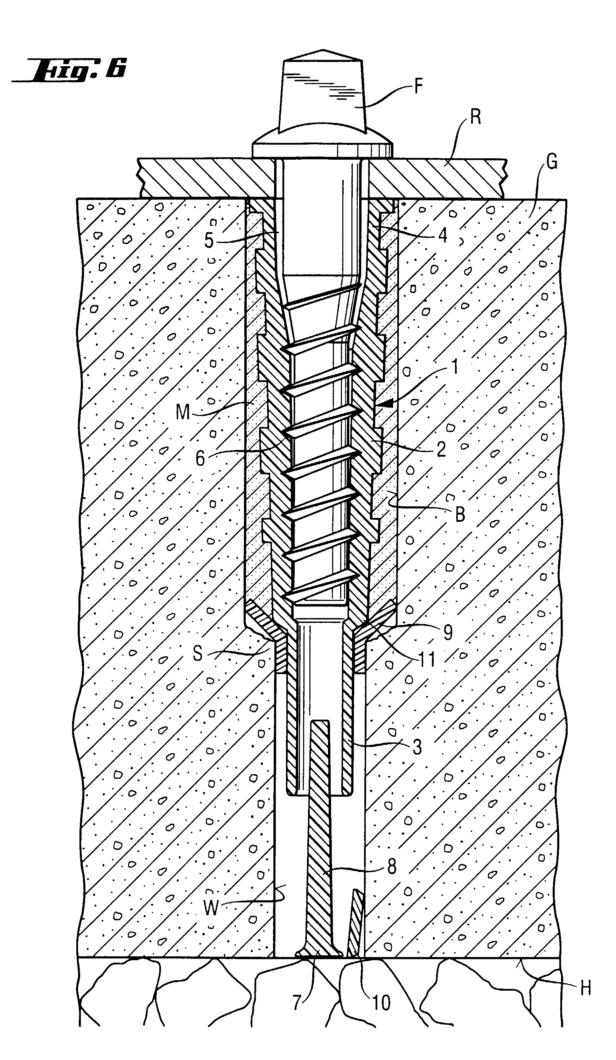

Fig. 6 zeigt die erfindungsgemässe Ankerhülse 1 im eingemörtelten Zustand. Die in die Aufnahmebohrung B eingebrachte Mörtelmasse M ist ausgehärtet und bildet mit der Innengewindehülse 2 und der Bohrlochwandung einen Verbund. Um ein ungehindertes Abfliessen beispielsweise von Regenwasser zu ermöglichen, muss die Innengewindehülse 2 zur Entwässerungsbohrung W hin geöffnet werden. Dies erfolgt, vorzugsweise automatisch, während des Eindrehens des Befestigungselements F, beispielsweise einer Schwellenschraube, in die Innengewindehülse 2, um beispielsweise eine Schiene R an einer Betonschwelle G zu fixieren. Das zum Bohrlochgrund weisende vordere Ende des Befestigungselements F stösst während des Befestigungsvorgangs an den vom Verschlussteil 7 abragenden Fortsatz 8. Durch das Eindrehen des Befestigungselements F wird der Fortsatz 8 in Richtung der Entwässerungsbohrung gepresst. Dabei bricht die Verbindung zwischen dem freien Ende des vorderen Bereichs 3 und dem Verschlussteil 7. Der Fortsatz und das vorzugsweise einstückig mit ihm verbundene Verschlussteil fallen in die Entwässerungsbohrung W und geben diese frei. Regenwasser, welches beispielsweise in die Ankerhülse 1 eintritt, kann nunmehr durch die Entwässerungsbohrung W wieder abfliessen.

Die erfindungsgemäss ausgebildete und anhand eines Ausführungsbeispiels erläuterte Ankerhülse eignet sich insbesondere für die Verbundankerbefestigung von Schienen für Schienenfahrzeuge auf Betonschwellen. Dabei kann es sich um Erstbefestigungen in Aufnahmebohrungen mit Entwässerungsbohrung handeln; sie kann auch bei einer nachträglichen Sanierung von bereits korrodierten Befestigungspunkten eingesetzt werden, bei der bereits vorhandene Befestigungspunkte ausgebohrt und die erstellten Aufnahmbohrungen mit Entwässerungsbohrungen versehen werden. Die Entwässerungsbohrung ermöglicht es, dass in die Aufnahmebohrung eingedrungenes Wasser wieder abfliessen kann. Die Verankerung der Ankerhülse erfolgt mit Hilfe von fliessfähigen organischen und/oder anorganischen Mörteln. Diese würden im Normalfall durch die Entwässerungsbohrung aus der Aufnahmebohrung abfliessen. Dem wirkt die erfindungsgemässe Ausbildung der Ankerhülse entgegen. Indem sie zwei konzentrisch und hintereinander angeordnete Verschlusselemente aufweist, die das zum Bohrlochgrund weisende zweite Ende flüssigkeitsdicht abschliessen und nacheinander aufdrückbar sind, kann zunächst die Entwässerungsbohrung derart verschlossen werden, dass die Mörtelmasse nicht in die Entwässerungsbohrung abfliessen kann. Das zweite Verschusselement sorgt dafür, dass die Mörtelmasse auch nicht in das Innere der Ankerhülse eindringen kann und dadurch das Einbringen und Fixieren des Befestigungselementes verhindert. Die Verschlusselemente werden nacheinander wieder geöffnet, so dass die Entwässerungsbohrung im gesetzten Zustand des Verbundankers wieder freigegeben ist.

## Patentansprüche

1. Ankerhülse für Verbundanker umfassen eine Innengewindehülse (2), die mittels organischem und oder/anorganischem Mörtel (M) in einer vorbereiteten Aufnahmebohrung (B) in einer Betonschwelle oder dergleichen Untergrund (G) verankerbar ist und an ihrem einen, hinteren Endbereich (4) Lastangriffsmittel (6) aufweist, **dadurch gekennzeichnet**, dass die Innengewindehülse (2) an ihrem zweiten, vorderen Ende (3) zwei konzentrisch und hintereinander angeordnete, das freie Ende des vorderen Bereichs (3) flüssigkeitsdicht abschliessende Verschlusselemente (7, 9) aufweist, die nacheinander aufdrückbar sind.

2. Ankerhülse nach Anspruch 1, dadurch gekennzeichnet, dass die Verschlussteile ein mit dem freien Ende des vorderen Bereichs (3) der Innengewindehülse (2) verbundenes, ausdrückbares Verschlussteil (7) und eine auf das freie Ende aufsteckbare, im wesentlichen napfförmige Abdichtkappe (9) umfassen, die einen ausdrückbaren Bodenbereich (10) aufweist.

3. Ankerhülse nach Anspruch 2, dadurch gekennzeichnet, dass die Innengewindehülse (2) im vorderen Bereich (3) einen kleineren Durchmesser aufweist als im hinteren Endbereich (4) und dass die Abdichtkappe (9) durch Reibungsschluss am Umfang des freien Endes des vorderen Bereichs (3) der Innengewindehülse (2) gehalten ist.

4. Ankerhülse nach Anspruch 2 oder 3, dadurch gekennzeichnet, dass der grösste Durchmesser des mit der Innengewindehülse (2) verbundenen Verschlussteils (7) kleiner ist als der Durchmesser des ausdrückbaren Bodenbereichs (10) der Abdichtkappe (9).

5. Ankerhülse nach Anspruch 4, dadurch gekennzeichnet, dass das Verschlussteil (7) einen sich im Inneren der Hülse vom freien Ende in den Bereich der Lastangriffmittel (6) erstreckenden Fortsatz (8) aufweist.

6. Ankerhülse nach einem der Ansprüche 2 bis 5, dadurch gekennzeichnet, dass die Abdichtkappe (9) einen grössten Durchmesser aufweist, der derart bemessen ist, dass sie ohne Ausdrücken ihres Bodenbereichs (10) in die vorbereitete Aufnahmebohrung (B) einführbar ist und dort durch Reibungsschluss gehalten ist, wobei der Reibungsschluss zwischen der Wandung der Aufnahmebohrung (B) und der Abdichtkappe (9) grösser ist als der Reibungsschluss zwischen der Abdichtkappe (9) und dem freien Ende des vorderen Bereichs (3) der Innengewindehülse.

7. Verbundanker, insbesondere für Verankerungen in Aufnahmebohrungen, die am Bohrlochgrund mit einer Entwässerungsbohrung versehenen sind, umfassend eine Ankerhülse (1) und ein in der Ankerhülse (1) vorzugsweise lösbar, fixierbares Befestigungselement (F), gekennzeichnet durch eine Ankerhülse (1) gemäss einem der Ansprüche 1 bis 6.

8. Verbundanker nach Anspruch 7, dadurch gekennzeichnet, dass die Ankerhülse (1) eine mit einem Innengewinde versehene Kunststoffhülse ist und dass das Befstigungselement (F) eine Schwellenschraube ist.

9. Verfahren zur Erstellung von korrosionsbeständigen Befestigungen, bei dem ein Verbundanker gemäss Anspruch 7 oder 8 mittels organischem und/oder anorganischem Mörtel (M) in einer vorbereiteten Aufnahmebohrung (B) verankert wird, der eine Ankerhülse (1) und ein, vorzugsweise lösbar, in der Ankerhülse (1) fixierbares Befestigungselement (F) umfasst, gekennzeichnet durch die folgenden Verfahrensschritte:
- nach Erstellung der Aufnahmebohrung (B) wird diese am Bohrlochgrund mit einer Entwässerungsbohrung (W) geringeren Durchmessers versehen;
- eine Ankerhülse (1) gemäss einem der Ansprüche 1 bis 6 wird in die vorbereitete Aufnahmebohrung (B) eingeschoben und das Abdichtteil (9) bis zur Mündung der Entwässerungsbohrung am Bohrlochgrund vorgeschoben;
- die Ankerhülse (1) wird wieder aus der Aufnahmebohrung (B) herausgezogen, wobei die Abdichtkappe (9) vom freien Ende des vorderen Bereichs (3) der Ankerhülse abgestreift wird und am Bohrlochgrund die Entwässerungsbohrung (W) flüssigkeitsdicht verschliesst;
- der organische und/oder anorganische Mörtel (M) wird in die Aufnahmebohrung (B) eingebracht;
- die Ankerhülse (1) ohne Abdichtkappe (9) wird vollständig in die Aufnahmebohrung (B) eingeschoben und dabei der Bodenbereich (10) der Abdichtkappe (9) in die Entwässerungsbohrung (W) durchgedrückt;
- der Mörtel (M) wird ausgehärtet; und
- nach dem Anordnen und Justieren eines zu befestigenden Gegenstandes (R) wird ein Befestigungselement (F) in die Ankerhülse (1) eingebracht und dort fixiert, wobei das Verschlusselement am freien Ende des vorderen Bereichs (3) der Ankerhülse (1) ausgedrückt wird und in die geöffnete Entwässerungsbohrung (w) verdrängt wird und somit die Entwässerungsbohrung (W) freigegeben wird.

10. Verfahren nach Anspruch 9, dadurch gekennzeichnet, dass die Aufnahmebohrungen (B) und die Entwässerungsbohrungen (W) in Betonschwellen für die tragende Unterstützung von Schienen für Schienenfahrzeuge erstellt werden.

## Claims

1. Anchoring sleeve for shear connectors, comprising an internally threaded sleeve (2) which is adapted to be anchored by means of organic and/or inorganic mortar (M) in a prepared locating bore (B) in a concrete sleeper or similar base (G), and which on one, rear extreme region (4) incorporates load application means (6), characterised in that on its second, frontal end (3) the internally threaded sleeve (2) has two closure elements (7, 9) which are arranged concentrically and one behind the other and seal the free end of the frontal zone (3) in a fluid-tight manner, and which are adapted to be pressed on one after the other.

2. Anchoring sleeve according to claim 1, characterised in that the closure parts comprise a closure part (7) which is joined to the free end of the frontal zone (3) of the internally threaded sleeve (2) and is adapted to be pressed out, and a substantially cup-shaped end cap (9) which is adapted to be pushed onto the free end and which incorporates a bottom zone (10) which can be pressed out.

3. Anchoring sleeve according to claim 2, characterised in that the internally threaded sleeve (2) has a smaller diameter in the frontal zone (3) than in the rear extreme zone (4), and that the end cap (9) is held by frictional resistance on the circumference of the free end of the frontal zone (3) of the internally threaded sleeve (2).

4. Anchoring sleeve according to claim 2 or 3, characterised in that the maximum diameter of the closure part (7) joined to the internally threaded sleeve (2) is smaller than the diameter of the bottom zone (10) of the end cap (9) which is adapted to be pressed out.

5. Anchoring sleeve according to claim 4, characterised in that the closure part (7) incorporates a continuation piece (8) which extends inside the sleeve from the free end into the region of the load application means (6).

6. Anchoring sleeve according to any of claims 2 to 5, characterised in that the end cap (9) has a maximum diameter of a dimension such that it can be introduced into the prepared locating hole (B) without pressing out its bottom zone (10) and is held there by frictional resistance, the frictional resistance between the wall of the locating bore (B) and the end cap (9) being greater than the frictional resistance between the end cap (9) and the free end of the frontal zone (3) of the internally threaded sleeve.

7. Shear connector, more particularly for anchoring applications in locating bores that incorporate a drain hole in the base of the bore, comprising an anchoring sleeve (1) and a fastening element (F) which is adapted to be fixed, preferably removably, in the anchoring sleeve (1), characterised by having an anchoring sleeve (1) as claimed in any of claims 1 to 6.

8. Shear connector according to claim 7, characterised in that the anchoring sleeve (1) is a plastics sleeve provided with an internal thread and that the fastening element (F) is a coach screw.

9. Process for producing corrosion-resistant fixings, wherein a shear connector as claimed in claim 7 or 8 is anchored by means of organic and/or inorganic mortar (M) in a prepared locating bore (B) which comprises an anchoring sleeve (1) and a fastening element (F) which is adapted to be fixed, preferably removably, in the anchoring sleeve (1), characterised by the following process steps:
- after the locating bore (B) has been produced, the base of said bore is provided with a drain hole (W) of small diameter;
- an anchoring sleeve (1) as claimed in any of claims 1 to 6 is inserted into the prepared locating hole (B) and the occluding element (9) is advanced until the drain hole opens out in the bottom of the bore;
- the anchoring sleeve (1) is withdrawn again from the locating bore (B), the end cap (9) being swept by the free end of the frontal zone (3) of the anchoring sleeve and sealing the drain hole (W) in the base of the bore in a fluid-tight manner;
- the organic and/or inorganic mortar (M) is introduced into the locating bore (B);
- the anchoring sleeve (1) minus the end cap (9) is inserted fully into the locating bore (B) and the base zone (10) of the end cap (9) is pushed through into the drain hole (W);
- the mortar (M) is allowed to set; and
- after an object (R) to be fixed has been arranged in position and any final adjustment made, a fastening element (F) is introduced into the anchoring sleeve (1) and fixed therein, pushing out the closure element on the free end of the frontal zone (3) of the anchoring sleeve (1) and forcing it into the open drain hole (W) and thus exposing the drain hole (W).

10. Process according to claim 9, characterised in that the locating bores (B) and the drain holes (W) are produced in concrete sleepers designed to support rails for rail vehicles.

## Revendications

1. Douille d'ancrage pour boulon d'ancrage composite comprenant une douille taraudée (2) qui peut être scellée, au moyen d'un mortier (M) organique et/ou inorganique, dans un trou récepteur (B) préparé, dans une traverse en béton ou dans un support (G) similaire et qui présente des moyens d'application de charge (6) à l'une de ses zones terminales arrière (4), caractérisée en ce que la douille taraudée (2) présente à sa deuxième extrémité, avant (3), deux éléments de fermeture (7, 9) disposés concentriquement et l'un derrière l'autre qui ferment l'extrémité libre de la zone avant (3) de manière étanche aux liquides et qui peuvent être appliqués l'un après l'autre.

2. Douille d'ancrage selon la revendication 1, caractérisée en ce que les éléments de fermeture comprennent un élément de fermeture éjectable (7), relié à l'extrémité libre de la zone avant (3) de la douille taraudée (2) ainsi qu'un capuchon d'étanchéité (9), sensiblement en forme de godet, à emboîter sur l'extrémité libre, qui présente une zone de fond éjectable (10).

3. Douille d'ancrage selon la revendication 2, caractérisée en ce que la douille taraudée (2) présente dans la zone avant (3) un plus petit diamètre que dans la zone terminale arrière (4) et en ce que le capuchon d'étanchéité (9) est maintenu par friction sur le pourtour de l'extrémité libre de la zone avant (3) de la douille taraudée (2).

4. Douille d'ancrage selon la revendication 2 ou 3, caractérisée en ce que le diamètre maximal de l'élément de fermeture (7) relié à la douille taraudée (2) est inférieur au diamètre de la zone de fond éjectable (10) du capuchon d'étanchéité (9).

5. Douille d'ancrage selon la revendication 4, caractérisée en ce que l'élément de fermeture (7) présente un prolongement (8) s'étendant à l'intérieur de la douille à partir de l'extrémité libre, dans la zone des moyens d'application de charge (6).

6. Douille d'ancrage selon l'une des revendications 2 à 5, caractérisée en ce que le capuchon d'étanchéité (9) présente un diamètre maximal qui est tel qu'il peut être introduit sans éjection de sa zone de fond (10), dans le perçage formant logement (B) préparé et qu'il peut y être maintenu par friction, l'adhérence par friction entre la paroi du perçage formant logement (B) et le capuchon d'étanchéité (9) étant supérieure à l'adhérence par friction entre le capuchon d'étanchéité (9) et l'extrémité libre de la zone avant (3) de la douille taraudée.

7. Boulon d'ancrage collé, en particulier pour des ancrages dans des trous récepteurs, qui sont pourvus d'un trou de drainage sur le fond du trou, comprenant une douille d'ancrage (1) et un élément de fixation (F) à fixer de préférence de manière non permanente dans la douille d'ancrage (1), caractérisé par une douille d'ancrage (1) selon l'une des revendications 1 à 6.

8. Boulon d'ancrage composite selon la revendication 1, caractérisé en ce que la douille d'ancrage (1) est une douille en matière plastique pourvue d'un taraudage et en ce que l'élément de fixation (F) est une vis de traverse.

9. Procédé pour la réalisation de fixations résistant à la corrosion, dans lequel un boulon d'ancrage composite selon la revendication 7 ou 8 est scellé au moyen d'un mortier (M) organique et/ou inorganique dans un trou récepteur (B) préparé, lequel comprend une douille d'ancrage (1) et un élément de fixation (F) à fixer de préférence de manière non permanente dans la douille d'ancrage (1), caractérisé par les étapes de procédé suivantes:
- après réalisation du trou récepteur (B) celui-ci est pourvu sur le fond du trou d'un trou de drainage (W) de diamètre réduit ;
- une douille d'ancrage selon l'une des revendications 1 à 6 est enfoncée dans le trou récepteur (B) préparé et l'élément d'étanchéité (9) est poussé jusqu'à l'embouchure du trou de drainage sur le fond du trou ;
- la douille d'ancrage (1) est à nouveau extraite du trou récepteur (B), le capuchon d'étanchéité (9) étant enlevé de l'extrémité libre de la zone avant (3) de la douille d'ancrage et sur le fond du trou le trou de drainage (W) est fermé de manière étanche aux liquides ;
- le mortier (M) organique et/ou inorganique est introduit dans le trou récepteur (B) ;
- la douille d'ancrage (1) sans le capuchon d'étanchéité (9) est totalement introduite dans le trou récepteur (B) et la zone de fond (10) du capuchon d'étanchéité (9) est enfoncée entièrement dans le trou de drainage (W) ;
- le mortier (M) est durci ; et
- après mise en place et ajustement d'un objet (R) à fixer, un élément de fixation (F) est introduit dans la douille d'ancrage (1) et y est fixé, l'élément de fermeture étant éjecté à l'extrémité libre de la zone avant (3) de la douille d'ancrage et étant chassé dans le trou de drainage (W) ouvert et le trou de drainage (W) étant ainsi dégagé.

10. Procédé selon la revendication 9, caractérisé en ce que les trous récepteurs (B) et les trous de drainage (W) sont réalisés dans des traverses en béton pour supporter des rails pour les véhicules ferroviaires.
